# EUROPÄISCHE PATENTSCHRIFT

(11) **EP 1 048 163 B1**
(45) Veröffentlichungstag und Bekanntmachung des Hinweises auf die Patenterteilung: **10.04.2002**
(21) Anmeldenummer: 98904001.9
(22) Anmeldetag: 07.01.1998
(51) Int. Cl.: H04M 3/22, H04M 15/06

(54) **VERFAHREN ZUR STEUERUNG DER GESETZMÄSSIGEN ÜBERWACHUNG DES FERNMELDEVERKEHRS**
METHOD FOR CONTROLLING LEGAL MONITORING OF TELECOMMUNICATIONS
PROCEDE POUR LE CONTROLE D'UNE SURVEILLANCE LEGALE DE TELECOMMUNICATIONS

(30) Priorität: 13.02.1997 DE 19705505
(43) Veröffentlichungstag der Anmeldung: 02.11.2000
(73) Patentinhaber: SIEMENS AKTIENGESELLSCHAFT, 80333 München (DE)
(72) Erfinder: GUNDLACH, Michael, D-81739 München (DE); MORGENROTH, Andreas, D-80803 München (DE)
(86) Internationale Anmeldenummer: DE9800022
(87) Internationale Veröffentlichungsnummer: WO9836548

(56) Entgegenhaltungen:
- FR-A- 2 712 131

## Beschreibung

Nationale (z. B. G10-Gesetz, Fernmeldeüberwachungsverordnung, TKG) und internationale Gesetze verlangen von Betreibern eines öffentlichen (in Zukunft voraussichtlich auch eines privaten) Netzes, technische Vorkehrungen zu treffen, die es den sogenannten Bedarfsträgern (Kriminalpolizei, Geheimdienst) erlauben, den Fernmeldeverkehr verdächtiger Personen nach Maßgabe gesetzlicher Vorschriften zu überwachen. Diese Überwachung muß in konventionellen Festnetzen ebenso erfolgen wie z. B. in Mobilfunknetzen und Intelligenten Netzen. Bei klassischen Telefondiensten im Festnetz wird hierfür in der lokalen Vermittlungsstelle des zu überwachenden Teilnehmers der entsprechende Teilnehmerdatensatz gekennzeichnet und eine Art Konferenzschaltung zum Bedarfsträger eingerichtet.

Abhängig von der nationalen Gesetzgebung sind eine oder mehrere der folgenden Daten an die Bedarfsträger zu übermitteln (die folgende Liste erhebt keinen Anspruch auf Vollständigkeit) :
- Inhalt der Kommunikation
- Rufnummer des Anrufenden
- IN-Nummer des Anrufenden
- Lokaler Aufenthaltsort des Anrufenden (z. B. bei Mobilfunk)
- Rufnummer des Angerufenen
- IN-Nummer des Angerufenen
- Lokaler Aufenthaltsort des Angerufenen (z. B. bei Mobilfunk)
- Beginn der Kommunikation
- Ende der Kommunikation
- Dauer der Kommunikation
- verwendete Dienste.

Aus Gründen des Datenschutzes, aber auch wegen der Performance sollten nicht mehr Daten an die Bedarfsträger übermittelt werden als erforderlich. Je nach Grund für die Überwachung, nach Schwere des Verdachts gegen den Überwachten, oder nach Art des Bedarfsträgers kann die erforderliche bzw. genehmigungsfähige Auswahl aus diesen Daten eine andere sein. Z. B. ist in den USA ein zweistufiges Vorgehen vorgeschrieben, wobei zunächst nur die Verbindungsdaten und erst bei einem weiteren Beschluß von staatlicher Seite auch der übertragene Inhalt der Kommunikation übermittelt wird. Weiterhin gibt es unterschiedliche nationale Bestimmungen, nach denen z.B. nur bei erfolgreichem Verbindungsaufbau oder auch z. B. im Besetztfall oder bei Nichtabheben der Bedarfsträger informiert wird. Auch kann es sein, daß nur eine bestimmte Art von Diensten, z. B. nur Datendienste, überwacht werden soll.

Die bisherigen Lösungen sind statisch, d. h. es kann keine fallspezifische Auswahl aus den an den Bedarfsträger übermittelten Daten getroffen werden. Die Erfindung strebt eine andere Lösung an, welche eine fallspezifische Auswahl aus den an den Bedarfsträger übermittelten Daten ermöglicht.

Diese Aufgabe wird erfindungsgemäß durch ein Verfahren zur Steuerung der gesetzmäßigen Überwachung des Fernmeldeverkehrs mit Merkmalen nach Anspruch 1 gelöst. Bei diesem Verfahren wird für jeden Teilnehmer, der überwacht werden soll, und für jeden Bedarfsträger, der ihn überwacht, in einer Datenbasis einer maßgeblichen Netzkomponente (z. B. Vermittlungsstelle, SCP, HLR) gespeichert, welche Daten in welchen Fällen an einen Bedarfsträger übermittelt werden sollen. Dies kann in Form einer Tabelle geschehen, wie in Tabelle 1 beispielhaft dargestellt.

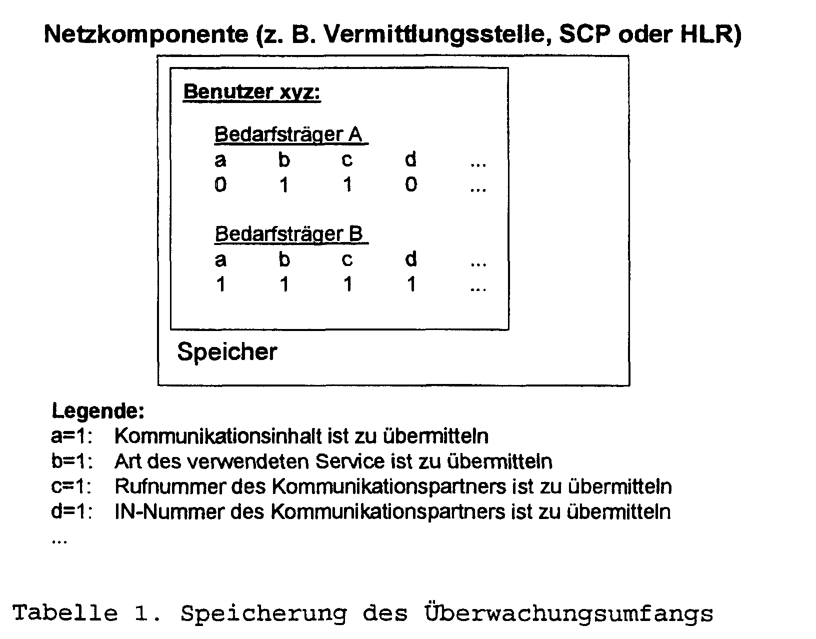

Alternativ können auch wenige Überwachungsprofile definiert werden, die typische Kombinationen von Überwachungsarten enthalten. Mögliche Profile sind in Tabelle 2 dargestellt. In diesem Fall braucht in der Netzkomponente nur jeweils das Überwachungsprofil angegeben zu werden.

**Tabelle 2.**

| Überwachungsprofile | | | | |
|---|---|---|---|---|
| Profil 1: | | | | |
| a | b | c | d | ... |
| 0 | 0 | 1 | 0 | ... |

| Profil 2: | | | | |
|---|---|---|---|---|
| a | b | c | d | ... |
| 1 | 0 | 1 | 0 | ... |

| Profil 3: | | | | |
|---|---|---|---|---|
| a | b | c | d | ... |
| 1 | 1 | 1 | 1 | ... |
| ... | | | | |
| **Legende**: a=1: Kommunikationsinhalt ist zu übermitteln b=1: Art des verwendeten Service ist zu übermitteln c=1: Rufnummer des Kommunikationspartners ist zu übermitteln d=1: IN-Nummer des Kommunikationspartners ist zu übermitteln ... | | | | |

Die bei einer Überwachungsmaßnahme in einer Netzkomponente ermittelten Daten werden, bevor sie an die Bedarfsträger weitergeleitet werden, gemäß dem gespeicherten Überwachungsumfang bzw. Überwachungsprofil gefiltert, und nur die erforderlichen Daten werden an die Bedarfsträger übermittelt.

Bei Mobilen Netzen und Intelligenten Netzen muß ggf. der Überwachungsumfang bzw. das Überwachungsprofil von der betreffenden Datenbasis (d.h. z.B. vom HLR bzw. SCP) an die Vermittlungsstelle weitergeleitet, dort temporär gespeichert und vor der Datenübertragung an die Bedarfsträger ausgewertet werden. Der Fachmann entnimmt den Deutschen Patentanmeldungen 19638970.4 und 19617353.1 die Grundlagen zur Realisierung der vorliegenden Erfindung in diesen Fällen.

Im Rahmen dieser Patentanmeldung wurden die folgenden Abkürzungen verwendet:
- HLR: Home Location Register
- IN: Intelligent Network
- SCP: Service Control Point
- TKG: Telekommunikationsgesetz

Im Rahmen dieser Patentanmeldung wurden die folgenden Dokumente zitiert:
1.) Deutsche Patentanmeldung 19638970.4 der Siemens AG vom 23.9.1996 mit der Bezeichnung "Einrichtung zur indirekten Übermittlung von Nachrichten in Daten- und/oder Kommunikationsnetzen", Erfinder: M. Gundlach.
2.) Deutsche Patentanmeldung 19617353.1 der Siemens AG vom 30.4.1996 mit der Bezeichnung "Verfahren zum Abhören einer Kommunikationsverbindung", Erfinder: M. Gundlach.

## Patentansprüche

1. Verfahren zur Steuerung der gesetzmäßigen Überwachung des Fernmeldeverkehrs durch einen oder mehrere Überwachungsbedarfsträger, z.B. durch Kriminalpolizei oder Geheimdienst, bei dem in einer für diese Überwachung maßgeblichen Netzkomponente eine Datenbasis vorgesehen ist, in der für zu überwachende Teilnehmer gespeichert ist, welche kommunikationsrelevanten Daten an den einen oder die mehreren Überwachungsbedarfsträger übermittelt werden sollen.

2. Verfahren nach Anspruch 1, bei dem eine Anzahl von Überwachungsprofilen definiert ist, in denen jeweils festgelegt ist, welche Daten an welchen Überwachungsbedarfsträger zu übermitteln sind, und bei dem für einen zu überwachenden Teilnehmer ein Überwachungsprofil oder mehrere, für unterschiedliche Überwachungsbedarfsträger geltende Überwachungsprofile gespeichert sein können.

## Claims

1. Method for controlling the statutory monitoring of telecommunication traffic by one or more relevant monitoring authorities, for example by the criminal police or secret service, in which there is provided in a network component essential for this monitoring a data base in which it is stored for subscribers to be monitored which communication-relevant data are to be transmitted to the one or more relevant monitoring authorities.

2. Method according to Claim 1, in which a number of monitoring profiles are defined in which it is stipulated in each case which data are to be transmitted to which relevant monitoring authority, and in which it is possible to store for a subscriber to be monitored one monitoring profile or a plurality of monitoring profiles valid for different relevant monitoring authorities.

## Revendications

1. Procédé pour le contrôle de la surveillance légale de télécommunications par un ou plusieurs organes demandeurs de surveillance, p.ex. par la police criminelle ou les services secrets, dans lequel on prévoit dans un composant de réseau prédominant pour cette surveillance, une base de données dans laquelle est stocké pour des abonnés à surveiller, quelles données pertinentes de la communication doivent être transmises audit un organe ou auxdits plusieurs organes demandeurs de surveillance.

2. Procédé selon la revendication 1, dans lequel on définit une série de profils de surveillance spécifiant chacun quelles données doivent être transmises à quel organe demandeur de surveillance, et dans lequel on peut stocker pour un abonné à surveiller, un profil de surveillance ou plusieurs profils de surveillance valables pour différents organes demandeurs de surveillance.
